# EUROPEAN PATENT APPLICATION

(11) **EP 2 937 879 A1**
(43) Date of publication of application: **28.10.2015**
(21) Application number: 13864876.1
(22) Date of filing: 19.12.2013
(51) Int. Cl.: H01G 9/02

(54) **SEPARATOR FOR ALUMINIUM ELECTROLYTIC CAPACITOR, AND ALUMINIUM ELECTROLYTIC CAPACITOR**

(30) Priority: 20.12.2012 JP 2012277944
(71) Applicant: Nippon Kodoshi Corporation, Kochi-shi, Kochi 781-0395 (JP)
(72) Inventor: TANAKA Kosuke, Kochi-shi Kochi 781-0395 (JP); FUJIMOTO Naoki, Kochi-shi Kochi 781-0395 (JP)
(74) Representative: Müller-Boré & Partner Patentanwälte PartG mbB
(86) International application number: PCT/JP2013/084074
(87) International publication number: WO 2014/098180

(57) **Abstract**

There is provided separator for an aluminum electrolytic capacitor constituted by a porous cellulose film having excellent impedance characteristics and short-circuit resistance characteristics, and an aluminum electrolytic capacitor using said separator. Here, the porous cellulose film is made of dissolved and regenerated cellulose without forming a cellulose derivative. The regenerated cellulose is obtained by forming in a film form a cellulose solvent obtained by dissolving cellulose in an amino oxide solvent, immersing the resulting cellulose solvent in water or a poor solvent of the amino oxide solvent so as to coagulate and regenerate the cellulose, removing the cellulose from the amino oxide solvent, and drying the resulting cellulose.

## Description

### TECHNICAL FIELD

The present invention relates to a separator for an aluminum electrolytic capacitor and an aluminum electrolytic capacitor. More specifically, it relates to a separator for an aluminum electrolytic capacitor and an aluminum electrolytic capacitor using said separator capable of down sizing and/or capacity enlargement and/or impedance reduction of the capacitor using, for example, a porous cellulose film made of regenerated cellulose as the separator.

### BACKGROUND ART

Generally, an aluminum electrolytic capacitor is constructed by interleaving a separator between an anode aluminum foil and a cathode aluminum foil and winding them into a capacitor element, impregnating the capacitor element with electrolyte, placing it in a case, then sealing it closed and aging it.

The capacitance of the capacitor is expressed by the following Formula 1.

C = εS/d Formula 1

C: Capacitance (F)
ε: Dielectric constant (F/m) of dielectric
S: Surface area (m²) of electrode
d: Distance (m) between electrodes

Of an aluminum electrolytic capacitor, the electrolyte impregnated in the separator becomes a real cathode through impregnation of the electrolyte in the separator within the capacitor element, and a very thin oxide film formed on the surface of the anode aluminum foil through electrolytic oxidation (chemical conversion) becomes a dielectric.

To attain a larger capacitance [C in Formula 1] of the aluminum electrolytic capacitor, it is effective to increase the surface area [S in Formula 1] of the electrodes and decrease the distance [d in Formula 1] between the electrodes since the dielectric constant [ε in Formula 1] is dependent on type of dielectric. Since the oxide film can be formed having an arbitrary thickness and with high withstand voltage per unit thickness, the aluminum electrolytic capacitor has a smaller distance d between the electrodes than other types of capacitors such as ceramic capacitors and film capacitors.

Moreover, etching of the anode aluminum foil allows an approximately 20 to 120 times larger effective area than the apparent area, and therefore the area S of the electrodes is larger. As a result, realization of a smaller aluminum electrolytic capacitor having a larger capacitance than other types of capacitors is the greatest feature.

With a development of highly electronized automobile-related digital equipment, smaller sizing and energy efficiency have advanced, and there is a demand for down sizing, impedance reduction, and longer operating life of components to be mounted. There is a high demand for down-sizing of capacitors when the capacitance is the same, and capacitors with a larger capacitance when the size is the same. Since there are many cases where a plurality of the aluminum electrolytic capacitor is used in the same device, and reduction in the number of mounted capacitors is possible if capacity is increased with the same size, there is high demand for capacity enlargement along with down sizing. Further down sizing or capacity enlargement of the aluminum electrolytic capacitor is a common important development point in various fields.

Furthermore, there is always a demand in the market for impedance reduction and longer operating life. Many merits can be attained such as reduction in power loss due to impedance reduction, response to voltage reduction of semiconductor operating power and increase in operating speed, and improvement in frequency characteristics. Moreover, when a ripple current is applied to the electrolytic capacitor, self-heating occurs due to thermal loss. Low impedance will inhibit generation of heat due to the ripple current. Generation of heat in the electrolytic capacitor directly affects its operating life, and demand for impedance reduction is even higher since little generation of heat leads to a longer operating life.

The main role of the separator in the aluminum electrolytic capacitor is isolation of the electrode films and retaining the electrolyte. Electrical insulation is required for the material of the separator, and hydrophilic properties and lipophilic properties are required for retaining various types of electrolytes. Cellulose has these properties and therefore electrolytic paper, that is, paper for electrolytic capacitor, which is cellulosic paper, is used as the separator for the electrolytic capacitor.

The element of the aluminum electrolytic capacitor is constructed by interleaving a separator between an anode aluminum foil and a cathode aluminum foil and winding them. The area [S in the above Formula 1] of the oxide film, which is a dielectric of the capacitor, can be increased because the length of the anode aluminum foil of an element of the same volume is increased by making the separator thinner, and capacity enlargement of the aluminum electrolytic capacitor can be attained. Furthermore, since the volume of the element of the same capacity decreases by making the separator thinner without changing the area [S in the above Formula 1] of the oxide film, down sizing of the aluminum electrolytic capacitor can also be attained.

It is well-known that the electrolyte and the separator have a great influence on the impedance characteristic of the capacitor. For the purpose of improving the impedance characteristics of the capacitor, means for lowering the resistance of the electrolyte, making the separator thinner and less dense, etc. are employed. However, since making the separator thinner and less dense lowers the electrode isolating ability of the separator, this becomes a cause of decrease in withstand voltage and increase in percent defective due to short circuits in the capacitor manufacturing process.

Some causes of short circuits of the aluminum electrolytic capacitor due to having made the separator thinner are piercing or damage of the separator due to burr on the tab portion or an electrode foil end, or burr of a connecting part between an electrode foil and a lead wire, damage of the separator due to mechanical stress such as vibration or impact, dielectric breakdown of the oxide film resulting from electrical stress such as spark discharge, the aging process during capacitor manufacturing and a defect of the oxide film, or the like. Making the separator thinner means lowering resistance to these causes of short circuits (referred to as 'short-circuit resistance characteristics' hereafter). It is effective to make the separator have a further equable and dense formation or have high density in order to maintain the same short-circuit resistance characteristics even if the separator is made thinner.

In the case of a low voltage aluminum electrolytic capacitor, there has been a strong demand for improvement in impedance characteristics and a tendency to newly employ an electrolytic paper that is thinner or has lower density. In the case where the electrolytic paper has been made thinner or to have a lower density, the short-circuit resistance characteristics deteriorate.

In the case of making paper using unrefined pulp or scarcely refined pulp, since the density may be lowered, but diameters of fibers constituting the paper are large, it is difficult to form dense fiber mats. Furthermore, it is difficult to make thin paper when using unrefined pulp or scarcely refined pulp. Even when realizing both low density and thin form while maintaining a strength available as electrolytic paper, it is difficult to make a thickness of 25 µm or less.

Meanwhile, if highly refining is continued, a large quantity of minute fibrils will generate, and the pulp will be fragmented into smaller pieces of several tens of nm to several µm. Use of highly refined pulp allows making of thin paper of approximately 10 µm. However, density of the paper increases, and impedance characteristics deteriorate significantly.

It is well-known that when regenerated cellulose fibers capable of being refined are highly refined, fibrils with high rigidity and small fiber diameters are generated. Microporous highly-minute paper may be made by making paper using highly refined, regenerated cellulose fibers (Patent Document 1).

Microporous separators using the same cellulose as the electrolytic paper as the main component are also proposed in Patent Documents 2 to 5.

Layers made of regenerated cellulose with the inventions described in Patent Documents 2 and 3 practically use porous sheets made of cellulose film fabricated through a viscose process. The inventions described in Patent Documents 4 and 5 use in effect as a separator, a microporous cellulose film fabricated through a cuprammonium rayon process.

Other well-known cellulose solvents include lithium chloride/ dimethylacetamide cellulose solvent, lithium hydroxide/ urea cellulose solvent (Non-patent Document 1), sodium hydroxide/ urea cellulose solvent (Patent Document 6), sodium hydroxide/ thiourea cellulose solvent (Patent Document 7) and ionic liquids (Non-patent Document 2).

### Prior Art Documents

### Patent Documents

Patent Document 1: JP H5-267103A
Patent Document 2: JP H10-3898A
Patent Document 3: JP H11-86827A
Patent Document 4: JP 2007-141498A
Patent Document 5: Republication of PCT International Publication No. 2008-139619A
Patent Document 6: Japanese Translation of PCT International Application Publication No. 2008-542560A
Patent Document 7: Japanese Translation of PCT International Application Publication No. 2009-508015A

### Non-patent Documents

Non-patent Document 1: "Experimental and analytical methods of cellulose" series No. 15, Dissolution of cellulose in alkaline-urea solvent and regenerative gelatinization thereof, KUGA, Shigenori, CAI Jie Cellulose Communications Vol. 15, No. 2 (2008)
Non-patent Document 2: CMC Publishing Co., Ltd., Ionic Liquid II- Chapter 13: Solubilization of poorly soluble substances, FUKAYA, Yukinobu and OHNO, Hiroyuki

### DISCLOSURE OF THE INVENTION

### Problem to be Solved by the Invention

However, it is well-known that even if regenerated cellulose fibers are highly refined, only the top layer portion of the fibers is made into fibrils, and the core portion is not made into fibrils but remains as is. For example, even if regenerated cellulose fibers having 12-µm diameters are highly refined, approximately 9 µm of the core portion will remain as is. Therefore, it is difficult to make paper with high minuteness and a thickness of 15 µm or less using highly refined, regenerated cellulose fibers. Furthermore, since the separator made of the highly refined, regenerated cellulose fibers becomes a fiber mat constituted by the fibril portions and the core portion, there are limitations to forming a uniform fiber mat.

As a representative example of a thin and microporous highly-minute separator is a porous film with polyolefin resin as a main constituent, which is used as a separator for lithium-ion batteries. However, since heat tolerance is insufficient, it cannot be used as a separator for aluminum electrolytic capacitors that require dimensional stability and chemical stability in temperatures of 100°C or higher. Moreover, since there is little retention of electrolyte, the electrolyte in the aluminum electrolytic capacitor easily dries up, thereby shortening the operating life.

Furthermore, the cellulose film constructed through the viscose process disclosed in Patent Documents 2 and 3 contains hydrosulfate. When using a separator having a high content of hydrosulfate, sulfate ions elute into the electrolyte, corroding the oxide film, which is to be an insulator for the anode aluminum foil of the aluminum electrolytic capacitor. A defective part of the oxide film is a cause of increase in short-circuit defects and leakage current.

In addition, it is necessary for the cellulose film made through the viscose process to reduce the degree of polymerization of the cellulose, so as to make appropriate viscosity of a cellulose solution at the time of manufacturing. However, decrease in degree of polymerization reduces strength of the cellulose film and resistance against the electrolyte.

Moreover, the cellulose film made through the cuprammonium rayon process disclosed in Patent Documents 4 and 5 contains sulfate ions as well as many copper ions. In the case of using a separator having a high content of copper ions, a failure leading to a short-circuit occurs in that copper ions seep into the electrolyte, precipitate as copper oxide on the defective part of the oxide film on the anode aluminum foil when a reverse voltage is applied while the capacitor is repeatedly charging and discharging, and become dendrite that penetrates the separator.

The cellulose film using the lithium chloride/ dimethylacetamide cellulose solvent has a high content of chlorine, and the lithium hydroxide/ urea cellulose solvent, the sodium hydroxide/ urea cellulose solvent and the sodium hydroxide/ thiourea cellulose solvent in actual use have a high content of hydrosulfate since diluted sulfuric acid is used in a coagulation bath for neutralizing the alkali.

According to Non-patent Document 2, the ionic liquids are well-known that 1-butyl 3-methylimidazolium salt including Cl⁻, Br⁻, SCN⁻, BF₄⁻, PF₆⁻ etc. as an anion dissolves cellulose. However, the ionic liquids that dissolve the cellulose use chlorine, which has good reactivity, or another halogen as an anion.

Since residual elements of the chlorine or halogen corrode the oxide film on the anode aluminum foil more than sulfate ions, use of a porous cellulose film made using a cellulose solvent such as these ionic liquids is unsuitable for use as a separator. Furthermore, as ionic liquids are very expensive, they are unsuitable for manufacturing constructional elements of an aluminum electrolytic capacitor characterized by its affordable price.

A porous cellulose film has hydrophilic properties and lipophilic properties as well as excellent electric insulation which is a characteristic of cellulose, and its thickness and density can be arbitrarily controlled. This allows provision of a separator having properties that are difficult to achieve with electrolytic paper, which is a mat of fibers. However, while, as mentioned before, there are many proposals for the porous cellulose film as a separator for electrical storage devices, it cannot be used as a separator for aluminum electrolytic capacitors since there is the problem of chemical impurities.

### Means of Solving the Problem

The present invention aims to provide a separator for an aluminum electrolytic capacitor having excellent impedance characteristics and short-circuit resistance characteristics and is constituted by a porous cellulose film made using an amine oxide cellulose solvent.

The present invention provides an aluminum electrolytic capacitor using as a separator a porous cellulose film made using the amine oxide cellulose solvent.

The configuration below, for example, is provided as a means for achieving said aim.

That is, a separator for an aluminum electrolytic capacitor is characterized in that it is constituted by a porous cellulose film made of dissolved and regenerated cellulose without forming a cellulose derivative.

Furthermore, for example, chlorine content of the porous cellulose film is 2 ppm or less. Alternatively, hydrosulfate content of the porous cellulose film is 10 ppm or less.

Yet further, thickness of the porous cellulose film is 5 to 70 µm, density of the porous cellulose film is 0.1 g/cm³ or greater and average pore size of the porous cellulose film is 5 µm or less.

Yet even further, for example, the porous cellulose film is characterized in that it is a porous cellulose film made of regenerated cellulose obtained by forming in a film form a cellulose solvent obtained by dissolving cellulose in an amino oxide solvent, immersing the resulting cellulose solvent in water or a poor solvent of the amino oxide solvent so as to coagulate and regenerate the cellulose, washing the regenerated cellulose with water to remove the amino oxide solvent, and drying the resulting cellulose.

Yet even further, for example, the main component of the amine oxide solvent is N-methylmorpholine N-oxide, or the regenerated cellulose is washed with water to remove the amine oxide solvent.

Yet even further, an aluminum electrolytic capacitor is characterized in that it uses any one of the above separators for the aluminum electrolytic capacitor.

### Results of the Invention

According to the present invention, a separator for an aluminum electrolytic capacitor having excellent short-circuit resistance characteristics and is capable of down sizing and/or capacity enlargement and/or impedance reduction of the capacitor, and an aluminum electrolytic capacitor using said separator may be provided.

### BRIEF DESCRIPTION OF DRAWINGS

FIG. 1 is a graph showing measurement results of the impedance measured at 100 kHz and the percent defective after aging of 16 WV aluminum electrolytic capacitors using separators of Working Examples 1 to 4, Comparative Example 1, and Conventional Examples 1 and 2;
FIG. 2 is a graph showing measurement results of the impedance measured at 100 kHz and the capacitance measured at 120 Hz of 16 WV aluminum electrolytic capacitors using the separators of Working Examples 1 to 4 and Comparative Examples 1 and 2;
FIG. 3 is a graph showing measurement results of the impedance measured at 1 kHz and the percent defective after aging of 450 WV aluminum electrolytic capacitors using porous cellulose films obtained in Working Examples 7 to 10 and Comparative Example 2, and electrolytic papers obtained in Conventional Example 5 and Reference Example 3 as separators; and
FIG. 4 is a graph showing measurement results of the impedance measured at 1 kHz and the capacitance measured at 120 Hz of 450 WV aluminum electrolytic capacitors using porous cellulose films obtained in Working Examples 7 to 10 and Comparative Example 2, and electrolytic papers obtained in Conventional Example 5 as separators.

### DESCRIPTION OF EMBODIMENTS

An embodiment of the present invention is explained with reference to drawings hereafter. This embodiment employs a configuration in which a porous cellulose film made using an amine oxide solvent interleaving between an anode aluminum foil and a cathode aluminum foil is used as a separator constituting an aluminum electrolytic capacitor.

It is preferable to use tertiary amine oxides as the amino oxides, which are main components of an amine oxide solvent, used in this embodiment. For example, while any tertiary amine oxide may be used as long as it dissolves cellulose and mixes it with water and is stable against water, use of N-methylmorpholine N-oxide (referred to as 'NMMO' hereafter) is particularly preferred from the aspect of availability, ease of collecting and refining used solvent, etc. Here, stable tertiary amine oxide against water means it does not induce a chemical reaction with water.

Composition of the cellulose solution used in this embodiment preferably has concentration ranges of 70 to 95% by weight of NMMO, 2 to 28% by weight of water, and 2 to 20% by weight of cellulose. If the ratio of NMMO falls below 70% by weight, dissolving cellulose becomes difficult. Note that when the concentration of cellulose in the solution drops below 2% by weight, a large amount of cellulose solution is required when making a cellulose film, thereby decreasing production efficiency, and when it exceeds 20% by weight, viscosity of the cellulose solution increases and is thereby inadequate for making a thin film.

Within this range, cellulose can be dissolved favorably and a homogeneous solution can be attained. However, solution conditions differ according to type of solvent, molding equipment, and even molding conditions, and therefore composition of the cellulose solution is not limited thereto.

Dissolution temperature is preferably within the range of 75°C to less than 150°C. A favorable cellulose solution cannot be obtained at 75°C or less, and decomposition of the NMMO and the cellulose may occur at 150°C or higher. Dissolving at 120°C or less is particularly favorable.

A cellulose base material that is either chlorine-free (TCF) bleached or unbleached is used to make the chlorine content of the porous cellulose film be 2 ppm or less. Since corrosiveness of the oxide film becomes stronger and increase in short-circuit defects and leakage current occurs when the chlorine content in the separator is greater than 2 ppm, it is unsuitable as a separator for an aluminum electrolytic capacitor. Note that the chlorine content here is a value measured by a method described in JIS C 2300 'Cellulosic papers for electrical purposes' - Part 2: 'Methods of test', Ion chromatography (extraction method) for chlorine content.

Furthermore, in order to make the hydrosulfate content of the porous cellulose film be 10 ppm or less, it is preferable to use cellulose having a hydrosulfate content of 200 ppm or less. While hydrosulfate decreases in a washing process after coagulation which will be described later, the hydrosulfate content in the porous cellulose film may exceed 10 ppm when washing is insufficient if a cellulose having a hydrosulfate content of 200 ppm or greater is used. If the hydrosulfate content in the separator exceeds 10 ppm, corrosiveness of the oxide film becomes stronger, thereby causing increase in short-circuit defects and leakage current. Note that the hydrosulfate content here is the value of the extract, which is used in the aforementioned chlorine content measurement, measured using the ion chromatograph.

Wood pulp, nonwood pulp, mercerized pulp, dissolving pulp and regenerated cellulose may be used as the cellulose base material. One or more types of these may be used in combination, and paper or nonwoven fabric made from these cellulose base materials may be used as well. It is particularly favorable to use dissolving pulp or cotton linter pulp as the cellulose base material. Dissolving pulp and cotton linter pulp are suitable for preparation of a uniform and homogeneous porous-cellulosic film as they have an α-cellulose content of 90% or greater and high cellulose purity. Characteristics of a porous cellulose film obtained from difference in chemical properties and physical properties of the cellulose base material may be adjusted.

The cellulose solution is passed through a heating extrusion die to be extruded, passed through little air gaps between the heating extrusion die and a coagulation bath, and put in the coagulation bath constituted by water or an NMMO poor solvent, thereby forming a cellulose film. The temperature of the water used in the coagulation bath may be boiling as long as it has fluidity, which also holds true for the temperature of the NMMO poor solvent.

As the film forming method, aside from using the heating extrusion die, a method of casting on a heated base material with a predetermined clearance and a method of forming a film by transferring it onto the base material using a heater roller are available. Once the cellulose is regenerated in the coagulation bath, it is washed with ion-exchange water and dried, thereby obtaining a thin, equable and dense cellulose film with few impurities. The obtained cellulose film has hydrophilic properties and lipophilic properties, and thus immersion of the film in the electrolyte makes the hydrogen bond between celluloses sever, causing the film to swell, and thereby retaining the electrolyte inside.

The method for making a cellulose film porous may employ a method of adding a water-soluble polymer that is compatible with the amine oxide cellulose solvent, making a film, and then removing the water-soluble polymer by dissolving; a method of adding particles that do not dissolve in the amine oxide cellulose solvent, making a film, and then dissolving and removing the particles; an organic solvent substitution method; a freeze drying method; a subcritical drying method; a super-critical drying method, or the like. Moreover, a porous cellulose film may be formed by making a capacitor element using as a separator a cellulose film to which a substance soluble in an electrolyte such as polylactic acid is added, and then dissolving the substance that was added when impregnating the electrolyte.

In the case of using the method of adding a water-soluble polymer that is compatible with the amine oxide cellulose solvent, making a film, and then dissolving and removing the water-soluble polymer, for example, 20 to 500% by weight with respect to cellulose of polyvinyl alcohol (referred to as PVA hereafter) with a degree of polymerization of 500 to 2500 and 98% or less saponification is added to an amine oxide cellulose solution, and then dissolved. A porous cellulose film may be obtained by making the obtained amine oxide cellulose PVA solution into a film, regenerating it in a coagulating bath, and washing with hot water so as to extract and remove the PVA, and then drying it.

A polymer other than PVA such as polyethylene oxide (referred to as PEO hereafter), polyacrylamide (referred to as PAM hereafter), starch, saccharide, vegetable gum, cellulose derivative, acrylic acid-based polymer, polyethylene imine, polyvinyl pyrrolidone, etc. that is compatible with the amine oxide cellulose solution and can be dissolved and removed using water or hot water in the washing process after the film is made may be used. A water-soluble polymer may be added before or after dissolving the cellulose in the amine oxide.

Addition to cellulose of 0.1% or more, preferably 0.3% or more of a substance such as PAM having a high aggregating effect that chemically acts with the cellulose allows formation of minute cellulose agglomerate in the amine oxide cellulose solution. Use of the amine oxide cellulose solution in this condition allows provision of a porous cellulose film.

When making the porous cellulose film, a plasticizer such as glycol, glycerin or the like may be added to the amine oxide cellulose solution as needed. Moreover, thickness and density of the porous cellulose film may be controlled by adding to the amine oxide cellulose solution, a bulking agent for papermaking chemicals that inhibits formation of hydrogen bonds, adding a chemical bulking agent before drying the cellulose film that has been made porous in the washing process, carrying out solvent substitution drying or freeze drying, etc.

In the case of using the method of adding particles that do not dissolve in the amine oxide cellulose solvent, making a film, and then dissolving and removing the particles, the porous cellulose film can be made by adding: for example, 5 to 300% by weight, preferably 10 to 150% by weight with respect to cellulose of silicone particles having particle size of 0.1 to 10 µm to an amine oxide cellulose solution, extracting and removing the silicone particles from an alkaline aqueous solution after the film is made; and then washing with water and drying.

A method of extraction and removal with an organic solvent or the like after film formation may be employed, using particles that are soluble in an organic solvent, such as polymethyl methacrylate, polystyrene etc. as well as silicone. Even with the method using these particles, the particles may be added before or after dissolving the cellulose in the amine oxide.

As other methods for making a film porous, an organic solvent substitution method of substituting an organic solvent, such as ethanol, acetone, or isopropanol, for the water in the cellulose film and drying it, a freeze drying method of freeze drying and subliming a solvent, a subcritical drying method, a super-critical drying method and the like are available. These drying methods may be used in combination with the method using a water-soluble polymer or the method using particles described above.

Changing the method of making a film porous or the conditions for making a film porous allows control of characteristics such as density, average pore size, etc. of the porous cellulose film to be comprised.

Thickness of the porous cellulose film is preferably 5 to 70 µm. Meanwhile, since the mechanical strength of a porous cellulose film thinner than 5 µm decreases remarkably, a problem in the making process, such as breaking in the porous cellulose film manufacturing process or aluminum electrolyte capacitor element manufacturing process, may occur. Furthermore, it is difficult to use this film as a separator as it is also weak against burrs of the anode aluminum foil and the cathode aluminum foil, and short-circuit resistance characteristics are weak.

On the other hand, if the film is thicker than 70 µm, percentage of the separator in the capacitor element increases, which is a drawback to capacity enlargement. Similarly, if a film thickness is greater than 70 µm, an increased distance between the anode aluminum foil and the cathode aluminum foil has a significant impact, thereby making it easier for impedance characteristics to deteriorate.

Density of the porous cellulose film is preferably 0.10 g/cm³ or greater. The case of a lower density than 0.10 g/ cm³ remarkably decreases the mechanical strength, thereby leading to generation of problems during the process, reduction of short-circuit resistance characteristics due to porosity becoming too high, and increase in the rate of short circuit generation in the capacitor.

Average pore size of the porous cellulose film is preferably 5 µm or less. In the case of a larger average pore size than 5 µm, reduction of short-circuit resistance characteristics is remarkable.

An aluminum electrolytic capacitor that has been sized down and/or capacity enlarged and/or impedance reduced can be made by interleaving a porous cellulose film obtained in this manner as a separator between an anode aluminum foil and a cathode aluminum foil and winding them into a capacitor element, immersing the capacitor element in liquid electrolyte so as to impregnate it with the electrolyte, placing it in a case, and then sealing it closed and aging it. Note that the porous cellulose film may be used independently or it may be used in combination with another separator such as electrolytic paper.

### Working Examples

Working examples of the separator and the aluminum electrolytic capacitor using the separator in the case where the porous cellulose film of the embodiment according to the present invention described above is used as the separator is described below.

### [Measurement method and evaluation method of separator characteristics]

Measuring method and evaluating method of respective testing results for separators described in respective working examples, comparative examples, conventional examples and reference examples are as given below.

Thickness, density, basis weight and chlorine content are measured in compliance with the test method of JIS C 2300: 'Cellulosic papers for electrical purposes'.

In measurement of thickness, ten samples are stacked, thickness is measured at three or more points using an automatic stop-type external micrometer, and a mean value per sample is calculated as the thickness of the samples.

Measurement of density is conducted in compliance with method B (method of finding density in an absolute dry condition).

The basis weight is calculated from the values of thickness and density.

In measurement of chlorine content, extract produced in compliance with '17.2.4.2' Extraction method Part 5 is measured through '17.2.4.3' Ion chromatography.

The hydrosulfate content is measured by the same method as the chlorine content.

In measurement of average pore size, average pore size (µm) is found from pore size distribution measured by a bubble point method (ASTMF 316-86, JIS K3832) using a Parm-Porometer manufactured by PMI.

### [Manufacturing method of aluminum electrolytic capacitor]

A separator is interleaved between an anode aluminum foil and a cathode aluminum foil, which have undergone etching and oxide film formation so as not to touch each other, and wound into a capacitor element. The capacitor element is impregnated with a predetermined electrolyte, placed in a case and then sealed so as to construct an aluminum electrolytic capacitor that has a diameter of 10 mm, height of 20 mm, and rated voltage of 16 WV or 63 WV or 450 WV.

### [Percent defective after capacitor aging]

Voltage applied to each of 1000 capacitor samples with respect to working examples, each of 1000 capacitor samples with respect to comparative examples, each of 1000 capacitor samples with respect to conventional examples, and each of 1000 capacitor samples with respect to reference examples is gradually increased until reaching approximately 110% of a rated voltage and then the samples are aged. Number of faulty capacitors including aging short-circuits, operation of an explosion proof valve, liquid leakage and external aberrations such as swelling of the sealing part are divided by 1000, and the resulting value is set as percent defective expressed in percentage.

### [Capacitance of aluminum electrolytic capacitor]

Capacitance of the electrolytic capacitor is measured at 20°C and a frequency of 120 Hz using an LCR meter.

### [Impedance of aluminum electrolytic capacitor]

Impedance of the electrolytic capacitor is measured at 20°C at a frequency of 100 kHz or at 20°C at a frequency of 1 kHz using an LCR meter.

### [Working Example 1]

A cellulose/NMMO solution having a cellulose/NMMO rate of 10/90 is obtained using TCF cotton linter pulp having a degree of polymerization of 1500. The obtained cellulose/NMMO solution is extruded from a 0.05 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, it is freeze dried, thereby making a porous cellulose film having a thickness of 28.1 µm, density of 0.11 g/cm³, an average pore size of 4.53 µm, a basis weight of 3.1 g/m², a chlorine content of 0.2 ppm, and a hydrosulfate content of 1.7 ppm.

### [Working Example 2]

A cellulose/NMMO solution having a cellulose/NMMO rate of 5/95 is obtained using TCF dissolving pulp having a degree of polymerization of 800. 200% by weight with respect to cellulose of polymethyl methacrylate particles having a 5 µm diameter is added to the obtained cellulose/NMMO solution and dispersed uniformly. It is then extruded from a 0.2 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, the polymethyl methacrylate particles are dissolved and removed in three acetone baths, the solvent is substituted in three isopropyl alcohol baths, and then dried in a drum-type dryer, thereby making a porous cellulose film having a thickness of 51.2 µm, density of 0.19 g/cm³, an average pore size of 2.96 µm, a basis weight of 9.7 g/m², a chlorine content of 1.9 ppm, and a hydrosulfate content of 8.5 ppm.

### [Working Example 3]

A cellulose/NMMO solution having a cellulose/NMMO rate of 3/97 is obtained using TCF dissolving pulp having a degree of polymerization of 800. 100% by weight with respect to cellulose of silicone particles having a 1 µm diameter and 1% by weight with respect to cellulose of glycerin as a plasticizer are added to the obtained cellulose/NMMO solution and dispersed uniformly. It is then extruded from a 0.1 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, the silicone particles are dissolved and removed in three 30% by weight potassium hydroxide aqueous solution baths, washed in three washing baths of ion-exchanged water and dried in a drum-type dryer, thereby making a porous cellulose film having a thickness of 5.5 µm, density of 0.72 g/cm³, an average pore size of 0.15 µm, a basis weight of 4.0 g/m², a chlorine content of 0.7 ppm, and a hydrosulfate content of 5.7 ppm.

### [Working Example 4]

A cellulose/NMMO solution having a cellulose/NMMO rate of 10/90 is obtained using TCF dissolving pulp having a degree of polymerization of 800. 300% by weight with respect to cellulose of polylactic acid particles having a 5 µm diameter are added to the obtained cellulose/NMMO solution and dispersed uniformly. It is then extruded from a 0.2 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, it is dried in a drum-type dryer, thereby making a polylactic acid-containing cellulose film having a thickness of 15.4 µm, density of 1.35 g/cm³, a basis weight of 20.8 g/m², a chlorine content of 0.8 ppm, and a hydrosulfate content of 7.2 ppm. The average pore size was too small to be measured by the bubble point method.

The polylactic acid-containing cellulose film is immersed in three gamma-butyllactone (GBL) washing baths, the polylactic acid particles are dissolved and removed and then dried, thereby making a porous cellulose film having a thickness of 15.4 µm, density of 0.34 g/cm³, an average pore size of 0.69 µm, and a basis weight of 5.2 g/m². Formation of a capacitor element using the polylactic acid-containing cellulose film and impregnating the GBL electrolyte allows a form of a porous cellulose film in an aluminum electrolytic capacitor.

### [Working Example 5]

A cellulose/ PVA/ NMMO solution having a cellulose/ PVA/ NMMO rate of 5/7.5/87.5 is obtained using TCF dissolving pulp having a degree of polymerization of 700 and PVA having 80% saponification and a degree of polymerization of 2000. The obtained cellulose/ PVA/ NMMO solution is extruded from a 0.3 mm-wide slit using a T die-type extruder, passed through 10 mm air gaps, and then immersed in a coagulation bath of a 20% by weight NMMO poor solvent so as to regenerate the cellulose/PVA film. Once the regenerated cellulose/PVA film is washed in three washing baths of 95°C ion-exchanged water so as to remove the PVA and the solvent is substituted in the three washing baths of ethanol, it is dried in a drum-type dryer, thereby making a porous cellulose film having a thickness of 24.8 µm, density of 0.45 g/cm³, an average pore size of 0.24 µm, a basis weight of 11.2 g/m², a chlorine content of 0.7 ppm, and a hydrosulfate content of 5.5 ppm.

### [Working Example 6]

A cellulose/NMMO solution having a cellulose/NMMO rate of 5/95 is obtained using TCF dissolving pulp having a degree of polymerization of 800. 10% by weight with respect to cellulose of silicone particles having a 3 µm diameter as well as 0.1 % by weight with respect to cellulose of glycerin as a plasticizer is added to the obtained cellulose/NMMO solution and dispersed uniformly. It is then extruded from a 0.8 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, the silicone particles are dissolved and removed in three 30% by weight potassium hydroxide aqueous solution baths and washed in three washing baths of ion-exchanged water, and the solvent is substituted in three washing baths of ethanol, it is dried in a drum-type dryer, thereby making a porous cellulose film having a thickness of 60.9 µm, density of 0.46 g/cm³, an average pore size of 0.17 µm, a basis weight of 28.0 g/m², a chlorine content of 0.3 ppm, and a hydrosulfate content of 3.6 ppm.

### [Working Example 7]

A cellulose/NMMO solution having a cellulose/NMMO rate of 3/97 is obtained using TCF cotton linter pulp having a degree of polymerization of 1500. Once 5000% by weight with respect to cellulose (500% by weight of PEO solids with respect to cellulose) of a 10% by weight PEO aqueous solution is added to the obtained cellulose/NMMO solution, it is heated up to 105°C under vacuum conditions so as to remove moisture, thereby obtaining a uniform cellulose/ PEO/ NMMO solution. The obtained cellulose/ PEO/ NMMO solution is extruded from a 0.9 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water and the solvent is substituted in three washing baths of ethanol, it is dried in a drum-type dryer, thereby making a porous cellulose film having a thickness of 65.8 µm, density of 0.41 g/cm³, an average pore size of 0.34 µm, a basis weight of 27.0 g/m², a chlorine content of 1.5 ppm, and a hydrosulfate content of 5.2 ppm.

### [Working Example 8]

A cellulose/NMMO solution having a cellulose/NMMO rate of 5/95 is obtained using TCF dissolving pulp having a degree of polymerization of 700. 2% by weight with respect to cellulose of PAM used as a flocculant is added as an active element and 1% by weight with respect to cellulose of a fats-and-oils-type nonionic surface-active agent used as a bulking agent is also added as an active element, and it is heated up to 105°C under vacuum conditions so as to remove moisture, thereby obtaining a mixed solution. The obtained mixed solution is extruded from a 0.6 mm-wide slit using a T die-type extruder, passed through 10 mm air gaps, and then immersed in a coagulation bath of a 20% by weight NMMO poor solvent so as to regenerate the cellulose. The regenerated cellulose is washed in three washing baths of ion-exchanged water and is dried in a drum-type dryer, thereby making a porous cellulose film having a thickness of 32.3 µm, density of 0.77 g/cm³, an average pore size of 0.17 µm, a basis weight of 24.9 g/m², a chlorine content of 0.7 ppm, and a hydrosulfate content of 9.3 ppm.

### [Working Example 9]

A cellulose/NMMO solution having a cellulose/NMMO rate of 15/85 is obtained using TCF cotton linter pulp having a degree of polymerization of 1500. 20% by weight with respect to cellulose of solid content of a 10% by weight PVA aqueous solution having 96% saponification and a degree of polymerization of 500 is added to the obtained cellulose/NMMO solution and is then heated up to 105°C under vacuum conditions so as to remove moisture, thereby obtaining a cellulose/ PVA/ NMMO solution having a cellulose/ PVA/ NMMO rate of 5/1/94. The obtained cellulose/ PVA/ NMMO solution is extruded from a 0.25 mm-wide slit using a T die-type extruder, passed through 10 mm air gaps, and then immersed in a coagulation bath of a 20% by weight NMMO poor solvent so as to regenerate the cellulose/PVA film. The regenerated cellulose/PVA film is washed in three washing baths of 95°C ion-exchanged water so as to remove the PVA and is dried in a drum-type dryer, thereby making a porous cellulose film having a thickness of 29.5 µm, density of 0.85 g/cm³, an average pore size of 0.09 µm, a basis weight of 25.1 g/m², a chlorine content of 0.4 ppm, and a hydrosulfate content of 8.2 ppm.

### [Working Example 10]

A cellulose/NMMO solution having a cellulose/NMMO rate of 2/98 is obtained using TCF dissolving pulp having a degree of polymerization of 600. The obtained cellulose/NMMO solution is extruded from a 0.4 mm-wide slit using a T die-type extruder, passed through 10 mm air gaps, and then immersed in a coagulation bath of ion-exchanged water so as to regenerate the cellulose. Once the regenerated cellulose is washed in three washing baths of ion-exchanged water, the solvent is substituted in three washing baths of isopropyl alcohol and the cellulose is dried in a drum-type dryer, thereby making a porous cellulose film having a thickness of 20.7 µm, density of 0.93 g/cm³, an average pore size of 0.06 µm, a basis weight of 19.3 g/m², a chlorine content of 0.8 ppm, and a hydrosulfate content of 2.1 ppm.

### [Comparative Example 1]

A cellulose/NMMO solution having a cellulose/NMMO rate of 2/98 is obtained using TCF cotton linter pulp having a degree of polymerization of 1500. The obtained cellulose/NMMO solution is extruded from a 0.15 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, it is freeze dried, thereby making a porous cellulose film having a thickness of 30.5 µm, density of 0.09 g/cm³, an average pore size of 5.42 µm, a basis weight of 2.7 g/m², a chlorine content of 0.4 ppm, and a hydrosulfate content of 2.8 ppm.

### [Comparative Example 2]

A cellulose/NMMO solution having a cellulose/NMMO rate of 18/82 is obtained using cotton linter pulp having a degree of polymerization of 1500. The obtained cellulose/NMMO solution is extruded from a 0.6 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, it is freeze dried, thereby making a porous cellulose film having a thickness of 72.3 µm, density of 0.45 g/cm³, an average pore size of 0.29 µm, a basis weight of 32.5 g/m², a chlorine content of 1.3 ppm, and a hydrosulfate content of 4.8 ppm.

### [Comparative Example 3]

A cellulose/NMMO solution having a cellulose/NMMO rate of 5/95 is obtained using ECF bleached dissolving pulp. The obtained cellulose/NMMO solution is extruded from a 0.6 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water and the solvent is substituted in three washing baths of isopropyl alcohol, the cellulose is dried in a drum-type dryer, thereby making a porous cellulose film having a thickness of 25.5 µm, density of 0.95 g/cm³, an average pore size of 0.05 µm, a basis weight of 24.2 g/m², a chlorine content of 2.5 ppm, and a hydrosulfate content of 7.6 ppm.

### [Comparative Example 4]

A cellulose/NMMO solution having a cellulose/NMMO rate of 5/95 is obtained using dissolving pulp having a sulfate ion content of 500 ppm. The obtained cellulose/NMMO solution is extruded from a 0.6 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water and the solvent is substituted in three washing baths of isopropyl alcohol, the cellulose is dried in a drum-type dryer, thereby making a porous cellulose film having a thickness of 27.2 µm, density of 0.92 g/cm³, an average pore size of 0.06 µm, a basis weight of 25.0 g/m², a chlorine content of 1.4 ppm, and a hydrosulfate content of 11.4 ppm.

### [Comparative Example 5]

ECF dissolving pulp is processed using sodium hydroxide and then processed using carbon disulfide, thereby making viscose. The obtained viscose is extruded into diluted sulfuric acid using a T die-type extruder and the cellulose is regenerated. Once the regenerated cellulose film is washed in three washing baths of ion-exchanged water, the solvent is substituted in three washing baths of isopropyl alcohol, and the cellulose is dried in a drum-type dryer, thereby making a porous cellulose film having a thickness of 25.0 µm, density of 0.95 g/cm³, an average pore size of 0.05 µm, a basis weight of 23.8 g/m², a chlorine content of 6.7 ppm, and a hydrosulfate content of 481 ppm.

### [Comparative Example 6]

A cellulose/NMMO solution having a cellulose/NMMO rate of 2/98 is obtained using TCF dissolving pulp having a degree of polymerization of 800. The obtained cellulose/NMMO solution is extruded from a 0.2 mm-wide slit using a T die-type extruder, passed through 10 mm air gaps, and then immersed in a coagulation bath of ion-exchanged water so as to regenerate the cellulose. A porous cellulose film having a thickness of 4.0 µm was attempted to be made by washing the regenerated cellulose in three washing baths of ion-exchanged water, substituting the solvent in three washing baths of isopropyl alcohol and drying the cellulose in a drum-type dryer. However, the film kept breaking in the drying step, and thus a porous cellulose film could not be obtained.

### [Comparative Example 7]

A cellulose/NMMO solution having a cellulose/NMMO rate of 3/97 is obtained using TCF dissolving pulp having a degree of polymerization of 800. 500% by weight with respect to cellulose of silicone particles having a 1 µm diameter and 1 % by weight with respect to cellulose of glycerin as a plasticizer are added to the obtained cellulose/NMMO solution and dispersed uniformly. It is then extruded from a 0.4 mm-wide slit using a T die-type extruder, passed through 10 mm air gaps, and then immersed in a coagulation bath of a 20% by weight NMMO poor solvent so as to regenerate the cellulose.

A porous cellulose film having a density of 0.06 g/cm³ was attempted to be made by washing the regenerated cellulose in three washing baths of ion-exchanged water, dissolving and removing the silicone particles in three 30% by weight potassium hydroxide aqueous solution baths, further washing it in three washing baths of ion-exchanged water, and drying the cellulose in a drum-type dryer. However, the film broke at the time when dissolving and removing the silicone particles, and thus no porous cellulose film could be obtained.

Note that since a porous cellulose film was not obtained in Comparative Examples 6 and 7, data thereof is omitted from Table 1.

### [Conventional Example 1]

A raw material made of 50% by weight of Manila hemp pulp and 50% by weight of esparto pulp is refined until reaching a CSF of 600 ml using a refining device and made into paper using a cylinder triplex machine so as to make cylinder triplex (electrolytic paper) having a thickness of 48.7 µm, density of 0.35 g/cm³, an average pore size of 13.6 µm, a basis weight of 17.0 g/m², a chlorine content of 0.3 ppm, and a hydrosulfate content of 0.5 ppm.

### [Conventional Example 2]

A raw material made of 50% by weight of Manila hemp pulp and 50% by weight of esparto pulp is refined until reaching a CSF of 500 ml using a refining device and made into paper using a cylinder duplex machine so as to make cylinder duplex (electrolytic paper) having a thickness of 51.7 µm, density of 0.49 g/cm³, an average pore size of 6.89 µm, a basis weight of 25.3 g/m², a chlorine content of 0.5 ppm, and a hydrosulfate content of 0.4 ppm.

### [Conventional Example 3]

A raw material resulting from refining solvent spinning rayon which is refinable, regenerated cellulose fibers, until reaching a CSF of 5 ml or less using a refining device is made into paper using a Fourdrinier machine so as to make Fourdrinier simplex (electrolytic paper) having a thickness of 24.5 µm, density of 0.44 g/cm³, an average pore size of 0.53 µm, a basis weight of 10.8 g/m², a chlorine content of 0.4 ppm, and a hydrosulfate content of 0.7 ppm.

### [Conventional Example 4]

A raw material made of 50% by weight of Manila hemp pulp and 50% by weight of esparto pulp is refined until reaching a CSF of 400 ml using a refining device and is made into paper using a cylinder duplex machine so as to make cylinder duplex (electrolytic paper) having a thickness of 90.6 µm, density of 0.61 g/cm³, an average pore size of 3.27 µm, a basis weight of 55.3 g/m², a chlorine content of 0.5 ppm, and a hydrosulfate content of 0.9 ppm.

### [Conventional Example 5]

As a raw material for Fourdrinier paper making, softwood kraft pulp is refined until reaching a CSF of 5 ml or less using a refining device in such a manner that a high density paper is made having a thickness of 25.2 µm and density of 0.86 g/ cm³ at a Fourdrinier part, while as a raw material for cylinder paper making, softwood kraft pulp is refined until reaching a CSF of 400 ml in such a manner that a paper having a thickness of 35.9 µm and density of 0.67 g/cm³ is made at a cylinder part, and then the obtained papers are combined together to make Fourdrinier/cylinder duplex (electrolytic paper) having a thickness of 61.1 µm, density of 0.75 g/cm³, a basis weight of 45.8 g/m², a chlorine content of 0.6 ppm, and a hydrosulfate content of 6.4 ppm. The average pore size was too small to be measured by the bubble point method.

### [Reference Example 1]

Hipore H6022 manufactured by Asahi Kasei E-materials Corporation (Hipore is a registered trademark of Asahi Kasei E-materials Corporation), which is a commercially available porous polyolefin film, has a thickness of 27.0 µm, density of 0.47 g/cm³, an average pore size of 0.12 µm, a basis weight of 12.7 g/m², a chlorine content of 0.3 ppm, and a hydrosulfate content of 0.6 ppm.

### [Reference Example 2]

A raw material made of 50% by weight of Manila hemp pulp and 50% by weight of esparto pulp is refined until reaching a CSF of 400 ml using a refining device and made into paper using a cylinder duplex machine so as to make cylinder duplex (electrolytic paper) having a thickness of 60.7 µm, density of 0.61 g/cm³, an average pore size of 5.09 µm, a basis weight of 37.0 g/m², a chlorine content of 0.7 ppm, and a hydrosulfate content of 0.3 ppm.

### [Reference Example 3]

A raw material resulting from refining unbleached softwood kraft pulp until reaching a CSF of 5 ml or less using a refining device is made into paper using a Fourdrinier machine so as to make Fourdrinier simplex (electrolytic paper) having a thickness of 20.4 µm, density of 0.85 g/ cm³, a basis weight of 17.3 g/m², a chlorine content of 0.8 ppm, and a hydrosulfate content of 8.9 ppm. The average pore size was too small to be measured by the bubble point method.

Thickness, basis weight, density, average pore size, chlorine content and hydrosulfate content of the porous cellulose films and the polylactic acid-containing cellulose film obtained in Working Examples 1 to 10, the porous cellulose films obtained in Comparative Examples 1 to 5, and the electrolytic papers obtained in Conventional Examples 1 to 5 and Reference Examples 1 to 3 are given in Table 1.

**[Table 1]**

| | Thickness | Basis weight | Density | Average pore size | Chlorine content | Hydrosulfate content |
|---|---|---|---|---|---|---|
| | *µ*m | g/m² | g/cm³ | *µ*m | ppm | ppm |
| Working Example 1 | 28.1 | 3.1 | 0.11 | 4.53 | 0.2 | 1.7 |
| Working Example 2 | 51.2 | 9.7 | 0.19 | 2.96 | 1.9 | 8.5 |
| Working Example 3 | 5.5 | 4.0 | 0.72 | 0.15 | 0.7 | 5.7 |
| Working Example 4 | 15.4 | 20.8 | 1.35 | - | 0.8 | 7.2 |
| (After dissolving) | 15.4 | 5.2 | 0.34 | 0.69 | - | - |
| Working Example 5 | 24.8 | 11.2 | 0.45 | 0.24 | 0.7 | 5.5 |
| Working Example 6 | 60.9 | 28.0 | 0.46 | 0.17 | 0.3 | 3.6 |
| Working Example 7 | 65.8 | 27.0 | 0.41 | 0.34 | 1.5 | 5.2 |
| Working Example 8 | 32.3 | 24.9 | 0.77 | 0.17 | 0.7 | 9.3 |
| Working Example 9 | 29.5 | 25.1 | 0.85 | 0.09 | 0.4 | 8.2 |
| Working Example 10 | 20.7 | 19.3 | 0.93 | 0.06 | 0.8 | 2.1 |
| Comparative Example 1 | 30.5 | 2.7 | 0.09 | 5.42 | 0.4 | 2.8 |
| Comparative Example 2 | 72.3 | 32.5 | 0.45 | 0.29 | 1.3 | 4.8 |
| Comparative Example 3 | 25.5 | 24.2 | 0.95 | 0.05 | 2.5 | 7.6 |
| Comparative Example 4 | 27.2 | 25.0 | 0.92 | 0.06 | 1.4 | 11.4 |
| Comparative Example 5 | 25.0 | 33.8 | 0.95 | 0,05 | 6.7 | 48.1 |
| Conventional Example 1 | 48.7 | 17.0 | 0.35 | 13.6 | 0.3 | 0.5 |
| Conventional Example 2 | 51.7 | 25.3 | 0.49 | 6.89 | 0.5 | 0.4 |
| Conventional Example 3 | 24.5 | 10.8 | 0.44 | 0.53 | 0.4 | 0.7 |
| Convectional Example 4 | 90.6 | 55.3 | 0.61 | 3.27 | 0.5 | 0.9 |
| Conventional Example 5 | 61.1 | 45.8 | 0.75 | - | 0.6 | 6.4 |
| Reference Example 1 | 27.0 | 12.7 | 0.47 | 0.12 | 0.3 | 0.6 |
| Reference Example 2 | 60.7 | 37.0 | 0.61 | 5.09 | 0.7 | 0.3 |
| Reference Example 3 | 20.4 | 17.3 | 0.85 | - | 0.8 | 8.9 |

Using the porous cellulose films obtained in Working Examples 1 to 3, the polylactic acid-containing cellulose film obtained in Working Example 4, the porous cellulose film obtained in Comparative Example 1, and the electrolytic papers obtained in Conventional Examples 1 and 2, one thousand 16 WV aluminum electrolytic capacitors using GBL electrolyte are constructed, and percent defective, impedance (100 kHz) and capacitance are measured.

The physical properties of the porous cellulose films obtained in Working Examples 1 to 3, the polylactic acid-containing cellulose film obtained in Working Example 4, the porous cellulose film obtained in Comparative Example 1, and the electrolytic papers obtained in Conventional Examples 1 and 2, and evaluation results of the aluminum electrolytic capacitors are given in Table 2. Table 2 gives a list of property measurement results of Working Examples 1 to 4, Comparative Example 1, and Conventional Examples 1 and 2.

**[Table 2]**

| | Separator characteristics | | | | | | Capacitor characteristics | | |
|---|---|---|---|---|---|---|---|---|---|
| | Thickness | Basis weight | Density | Average pore size | Chlorine content | Hydrosulfate content | Percent defective | Impedance | Capacitance |
| | µm | g/m² | g/cm³ | µm | ppm | ppm | % (1000) | Ω/100 kHz | µF |
| Working Example 1 | 28.1 | 3.1 | 0.11 | 4.53 | 0.2 | 1.7 | 1.2 | 0.023 | 1798 |
| Working Example 2 | 51.2 | 9.7 | 0.19 | 2.96 | 1.9 | 8.5 | 0.1 | 0.030 | 1473 |
| Working Example 3 | 5.5 | 4.0 | 0.72 | 0.15 | 0.7 | 5.7 | 0.9 | 0.025 | 2210 |
| Working Example 4 (After dissolving) | 15.4 | 5.2 | 0.34 | 0.69 | - | - | 0.6 | 0.026 | 2024 |
| Comparative Example 1 | 30.5 | 2.7 | 0.09 | 5.42 | 0.4 | 2.8 | 2.3 | 0.022 | 1771 |
| Conventional Example 1 | 48.7 | 17.0 | 0.35 | 13.6 | 0.3 | 0.5 | 2.1 | 0.041 | 1500 |
| Conventional Example 2 | 51.7 | 25.3 | 0.49 | 6.89 | 0.5 | 0.4 | 1.3 | 0.046 | 1466 |

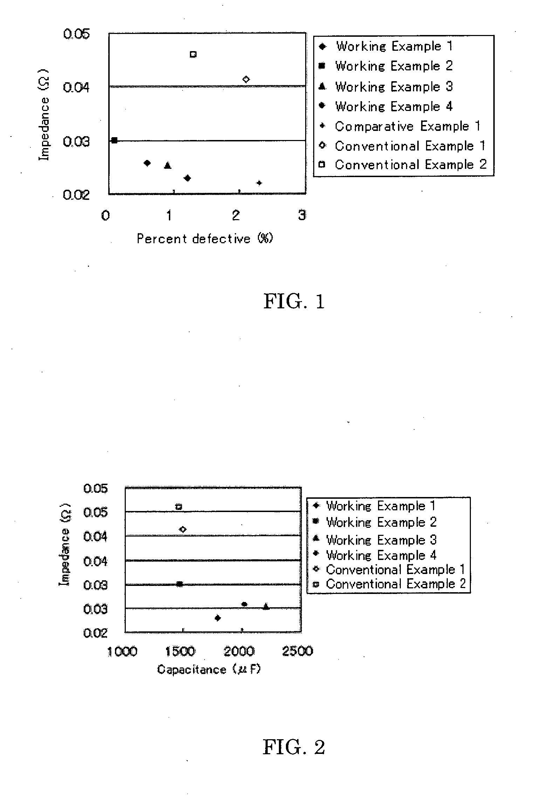

Measurement results of impedance measured at 100 kHz and percent defective after aging the aluminum electrolytic capacitors using the porous cellulose films obtained in Working Examples 1 to 3, the polylactic acid-containing cellulose film obtained in Working Example 4, the porous cellulose film obtained in Comparative Example 1, and the electrolytic papers obtained in Conventional Examples 1 and 2 are given in FIG. 1.

In the case of improving percent defective of the aluminum electrolytic capacitors using the electrolytic papers, changing the separator from the electrolytic paper obtained in Conventional Example 1 to the electrolytic paper obtained in Conventional Example 2 is generally carried out. In other words, changing to an electrolytic paper having a greater basis weight is carried out. In this case, as is evident from the relationships illustrated in FIG. 1, percent defective may be improved but impedance characteristics deteriorate at the same time.

Changing of the separator from the electrolytic paper obtained in Conventional Example 1 to the porous cellulose film obtained in Working Example 1 allows approximately 44% reduction of impedance of the aluminum electrolytic capacitor as well as approximately 43% reduction of percent defective after aging.

Since density of the porous cellulose film may be made lower than that of the electrolytic paper, the basis weight may be reduced while maintaining the thickness. Reducing the basis weight leads to impedance reduction of the aluminum electrolytic capacitor. Moreover, adjustment of manufacturing conditions for porous cellulose films allows construction of a porous cellulose film having an arbitrary average pore size. Making the pore size of the separator smaller reduces the basis weight, and sufficient short-circuit resistance characteristics can be maintained even if thickness is made thinner.

Even the aluminum electrolytic capacitors using the porous cellulose films obtained in Working Examples 2 and 3 showed lower percent defective and impedance than the aluminum electrolytic capacitors using the electrolytic papers obtained in Conventional Examples 1 and 2. The porous cellulose film obtained in Working Example 2 was larger in average pore size but thicker than the porous film obtained in Working Example 3, and thus percent defective of the porous cellulose film of Working Example 2 was lower.

Since the porous cellulose film obtained in Working Example 2 is thick and has a low density, much electrolyte may be retained inside. Since the aluminum electrolytic capacitor using the porous cellulose film obtained in Working Example 2 has a large amount of electrolyte and low impedance, it has excellent ripple current resistance and may maintain good properties even after long use.

Regarding the aluminum electrolytic capacitor using the polylactic acid-containing cellulose film obtained in Working Example 4, impregnating the polylactic acid-containing cellulose film in the GBL electrolyte dissolves the polylactic acid particles in the GBL electrolyte, thereby making a porous cellulose film. In comparison to the case of using a porous cellulose film from which polylactic acid particles are dissolved and removed beforehand, use of the polylactic acid-containing cellulose film has advantages such as being able to simplify the porous cellulose film making process, and being able to wind the elements of the aluminum electrolytic capacitor while maintaining separator strength.

The aluminum electrolytic capacitor using the polylactic acid-containing cellulose film obtained in Working Example 4 showed lower percent defective and lower impedance than those of the aluminum electrolytic capacitors using the electrolytic papers obtained in Conventional Examples 1 and 2.

In comparison to the aluminum electrolytic capacitor using the porous cellulose film obtained in Working Example 1 having a thickness of 28.1 µm, density of 0.11 g/cm³, and an average pore size of 4.53 µm, the aluminum electrolytic capacitor using the porous cellulose film obtained in Comparative Example 1 having a thickness of 30.5 µm, density of 0.09 g/cm³, and an average pore size of 5.42 µm had greater deterioration of only percent defective without change in impedance. When density drops below 0.10 g/cm³ or the average pore size exceeds 5 µm, the short-circuit resistance characteristics as a separator decrease and the percent defective increases significantly.

Measurement results of impedance measured at 100 kHz and capacitance measured at 120 Hz of the aluminum electrolytic capacitors using the porous cellulose films obtained in Working Examples 1 to 3, the polylactic acid-containing cellulose film obtained in Working Example 4, and the electrolytic papers obtained in Conventional Examples 1 and 2 are given in FIG. 2.

While the thickness of the porous cellulose film obtained in Working Example 1 is 28.1 µm, thickness of the electrolytic paper obtained in Conventional Example 1 is 48.7 µm. Change from use of the electrolytic paper obtained in Conventional Example 1 to the porous cellulose film obtained in Working Example 1 provides a significantly thinner separator. Therefore, as illustrated in FIG. 2, the aluminum electrolytic capacitor using the porous cellulose film obtained in Working Example 1 has an approximately 20% increase of capacitance than the aluminum electrolytic capacitor obtained in Conventional Example 1. In light of the verification in FIG. 1 and what has been found above, changing from use of the electrolytic paper of Conventional Example 1 to the porous cellulose film of Working Example 1 as the separator allows reduction in percent defective and impedance and improvement in capacitance.

The aluminum electrolytic capacitors using the porous cellulose film obtained in Working Example 3 and the polylactic acid-containing cellulose film obtained in Working Example 4 had further increase in capacitance than the aluminum electrolytic capacitors using the electrolytic papers obtained in Conventional Examples 1 and 2. While the aluminum electrolytic capacitor using the porous cellulose film obtained in Working Example 2 had the lowest percent defective among the aluminum electrolytic capacitors using the porous cellulose films obtained in Working Examples 1 to 4, the thickness was nearly the same as that of the electrolytic papers of Conventional Examples 1 and 2, and thus the capacitance did not increase.

Using the porous cellulose film obtained in Working Example 5, the electrolytic paper obtained in Conventional Example 3, and the porous polyolefin film of Reference Example 1, one thousand 63 WV aluminum electrolytic capacitors using GBL electrolyte are constructed, and percent defective, impedance (100 kHz) and capacitance are measured.

The physical properties of the porous cellulose film obtained in Working Example 5, the electrolytic paper obtained in Conventional Example 3, and the porous polyolefin film of Reference Example 1, and evaluation results of the aluminum electrolytic capacitors are given in Table 3. Table 3 gives a list of property measurement results of Working Example 5, Conventional Example 3 and Reference Example 1.

**[Table 3]**

| | Separator characteristics | | | | | | Capacitor characteristics | | |
|---|---|---|---|---|---|---|---|---|---|
| | Thickness | Basis weight | Density | Average pore size | Chlorine content | Hydrosulfate content | Percent defective | Impedance | Capacitance |
| | µm | g/m² | g/cm³ | µm | ppm | ppm | %(1000) | Ω/100 kHz | µF |
| Working Example 5 | 24.8 | 11.2 | 0.45 | 0.24 | 0.7 | 5.5 | 0 | 0.159 | 120 |
| Conventional Example 3 | 24.5 | 10.8 | 0.44 | 0.53 | 0.4 | 0.7 | 0.7 | 0.162 | 120 |
| Reference Examde 1 | 27.0 | 12.7 | 0.47 | 0.12 | 0.3 | 0.6 | 0 | 0.314 | 105 |

The porous cellulose film obtained in Working Example 5 has approximately the same thickness, basis weight, and density as the electrolytic paper of Conventional Example 3. However, since the constitutive cellulose has a small diameter and a dense structure, the average pore size has become less than half of that of the electrolytic paper of Conventional Example 3. Therefore, the percent defective of the aluminum electrolytic capacitor using the electrolytic paper of Conventional Example 3 is only 0.7% where percent defective of the aluminum electrolytic capacitor using the porous cellulose film of Working Example 5 is 0%. Exchange of the electrolytic paper with a porous cellulose film having the same thickness, basis weight and density allowed considerable reduction of the percent defective.

On the other hand, the aluminum electrolytic capacitor using the porous polyolefin film of Reference Example 1 as a separator has an impedance of 0.314Ω, which has deteriorated significantly in comparison to Conventional Example 3. This is considered to be caused by the small average pore size of the porous polyolefin film of Reference Example 1. Moreover, while the thicknesses of the separators are the same, the capacitance of the aluminum electrolytic capacitor has decreased to 87.5% in comparison to Working Example 5.

The cause of this is considered to be that the electrolyte cannot cover the entire surface of the oxide film of the anode aluminum foil since the retention of electrolyte is low, and thus the electrode area is small. Since the capacitance of the aluminum electrolytic capacitor has been confirmed small in the initial evaluation, there is a high possibility that the reducing speed of the capacity becomes faster compared to a cellulose separator during long time use. From the above, the porous polyolefin film is unsuitable as a separator for an aluminum electrolytic capacitor.

Using the porous cellulose film obtained in Working Example 6 and the electrolytic papers obtained in Conventional Example 4 and Reference Example 2, one thousand 450 WV aluminum electrolytic capacitors using GBL electrolyte are constructed, and percent defective, impedance (100 kHz) and capacitance are measured.

The physical properties of the porous cellulose film obtained in Working Example 6 and the electrolytic papers obtained in Conventional Example 4 and Reference Example 2, and evaluation results of the aluminum electrolytic capacitors are given in Table 4. Table 4 gives a list of property measurement results of Working Example 6, Conventional Example 4 and Reference Example 2.

**[Table 4]**

| | Separator characteristics | | | | | | Capacitor characteristics | | |
|---|---|---|---|---|---|---|---|---|---|
| | Thickness | Basis weight | Density | Average pore size | Chlorine content | Hydrosulfate content | Percent defective | Impendance | Capacitance |
| | µm | g/m² | g/cm³ | µm | ppm | ppm | %(1000) | Ω/100 kHz | µF |
| Working Example 6 | 60.9 | 28.0 | 0.46 | 0.17 | 0.3 | 3.6 | 0.1 | 24.09 | 1.3 |
| Conventional Example 4 | 90.6 | 55.3 | 0.61 | 3.27 | 0.5 | 0.9 | 0.6 | 40.15 | 1.0 |
| Reference Example 2 | 60.7 | 37.0 | 0.60 | 5.09 | 0.7 | 0.3 | 21.8 | 31.09 | 1.3 |

Changing of the separator from the electrolytic paper obtained in Conventional Example 4 to the porous cellulose film obtained in Working Example 6 allows reduction in percent defective and impedance and improvement in capacity of the aluminum electrolytic capacitor at the same time. While the thickness of the electrolytic paper of Conventional Example 4 is 90.6 µm, the electrolytic paper of Reference Example 2 has approximately the same thickness (60.9 µm) as the porous cellulose film obtained in Working Example 6.

When the separator is changed from the electrolytic paper of Conventional Example 4 to the electrolytic paper of Reference Example 2, the impedance is lowered, the capacitance is improved, and the percent defective is degraded up to 21.8%. When the separator is exchanged to a thinner electrolytic paper, the percent defective of the aluminum electrolytic capacitor is significantly degraded. However, since the porous cellulose film obtained in Working Example 6 has a smaller average pore size than the electrolytic paper obtained in Conventional Example 4, the percent defective does not decrease even if the thickness is made thinner.

Using the porous cellulose films obtained in Working Examples 7 to 10, the porous cellulose films obtained in Comparative Examples 2 to 5, and the electrolytic papers obtained in Conventional Example 5 and Reference Example 3, one thousand 450 WV aluminum electrolytic capacitors using ethylene glycol (EG) electrolyte are constructed, and percent defective, impedance (1 kHz) and capacitance are measured.

The physical properties of the porous cellulose films obtained in Working Examples 7 to 10, the porous cellulose films obtained in Comparative Examples 2 to 5 and the electrolytic papers obtained in Conventional Example 5 and Reference Example 3, and evaluation results of the aluminum electrolytic capacitors are given in Table 5.

**[Table 5]**

| | Separator characteristics | | | | | | Capacitor characteristics | | |
|---|---|---|---|---|---|---|---|---|---|
| | Thickness | Basis weight | Density | Average pore size | Chlorine content | Hydrosulfate content | Percent detective | Impedance | Capacitance |
| | µm | g/m² | g/cm³ | µm | ppm | ppm | %(1000) | Ω/100 kHz | µF |
| Working Example 7 | 65.8 | 27.3 | 0.41 | 0.34 | 1.5 | 5.2 | 0.1 | 18.47 | 4.6 |
| Working Example 8 | 32.3 | 24.9 | 0.77 | 0.17 | 0.7 | 9.3 | 0.1 | 21.34 | 5.9 |
| Working Example 9 | 29.5 | 25.1 | 0.85 | 0.09 | 0.4 | 8.2 | 0 | 23.28 | 6.1 |
| Working Example 10 | 20.7 | 19.3 | 0.93 | 0.06 | 0.8 | 2.1 | 0.2 | 19.98 | 6.6 |
| Comparative Example 2 | 72.3 | 32.5 | 0.45 | 0.29 | 1.3 | 4.8 | 0 | 30.21 | 4.3 |
| Comparative Example 3 | 25.5 | 24.2 | 0.95 | 0.05 | 2.5 | 7.6 | 55.7 | - | - |
| Comparative Example 4 | 27.2 | 25.0 | 0.92 | 0.06 | 1.4 | 11.4 | 36.9 | - | - |
| Comparative Example 5 | 25.0 | 23.8 | 0.95 | 0.05 | 6.7 | 48.1 | 100 | - | - |
| Conventional Example 5 | 61.1 | 45.8 | 0.75 | - | 0.6 | 6.4 | 0.2 | 38.80 | 4.7 |
| Reference Example 3 | 20.4 | 17.3 | 0.85 | - | 0.8 | 8.9 | 30.3 | 22.12 | 6.6 |

Since the porous cellulose film obtained in Comparative Example 3 has a chlorine content of 2.5 ppm, which is high, 55.7% of the aluminum electrolytic capacitors are found defective in the step after aging. Since the porous cellulose film obtained in Comparative Example 4 has a hydrosulfate content of 11.4 ppm, which is high, 36.9% of the aluminum electrolytic capacitors are found defective in the step after aging. When the chlorine content of the porous cellulose film exceeds 2 ppm or the hydrosulfate content exceeds 10 ppm, the percent defective of the aluminum electrolytic capacitor increases.

Since the porous cellulose film made by a viscose method obtained in Comparative Example 5 has high chlorine content and hydrosulfate content, all of them are found defective in the step after aging. The porous cellulose film made by the viscose method is unsuitable for the porous cellulose films of this embodiment.

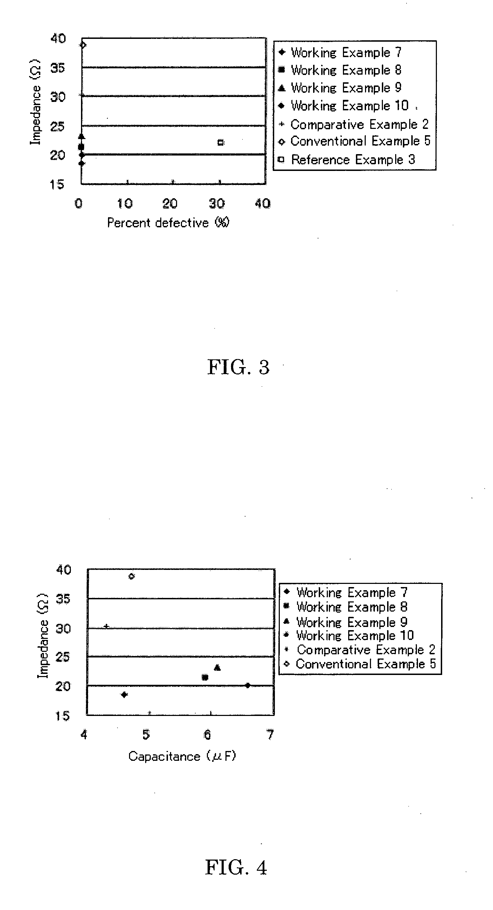

Measurement results of the impedance measured at 1 kHz and percent defective after aging of the aluminum electrolytic capacitors using the porous cellulose films obtained in Working Examples 7 to 10, the porous cellulose film obtained in Comparative Example 2, and the electrolytic papers obtained in Conventional Example 5 and Reference Example 3 are given in FIG. 3.

The percent defective of the aluminum electrolytic capacitor using the electrolytic paper of Conventional Example 5 is 0.2% and the impedance is 38.80 Ω. When the separator was changed to the electrolytic paper of Reference Example 3 for the purpose of decreasing the impedance, the impedance decreased to 22.12Ω but the percent defective deteriorated to 30.3%.

Changing of the separator from the electrolytic paper obtained in Conventional Example 5 to the porous cellulose films obtained in Working Example 7 to 10 allows maintaining or decreasing the percent defective of the aluminum electrolytic capacitor, and at the same time the impedance was nearly halved.

Measurement results of the impedance measured at 1 kHz and the capacitance measured at 120 Hz of the aluminum electrolytic capacitors using the porous cellulose films obtained in Working Examples 7 to 10, the porous cellulose films obtained in Comparative Example 2, and the electrolytic paper obtained in Conventional Example 5 are given in FIG. 4.

Changing of the separator from the electrolytic paper obtained in Conventional Example 5 having a thickness of 61.1 µm to the porous cellulose film obtained in Working Example 10 having a thickness of 20.7 µm increased the capacitance of the aluminum electrolytic capacitor by approximately 40%. The capacitance of the aluminum electrolytic capacitors using the porous cellulose films obtained in Working Examples 8 and 9 was also greater than that of the aluminum electrolytic capacitor using the electrolytic paper obtained in Conventional Example 5.

While the capacitance of the aluminum electrolytic capacitor using the porous cellulose film obtained in Working Example 7 was nearly the same as that of the aluminum electrolytic capacitor using the electrolytic paper obtained in Conventional Example 5, the impedance reduction rate was the greatest. Changing of the separator from the electrolytic paper obtained in Conventional Example 5 to the porous cellulose films obtained in Working Example 7 to 10 allows reduction of the impedance and/or increase in the capacitance while decreasing or maintaining the percent defective of the aluminum electrolytic capacitor.

Thickness of the porous cellulose film obtained in Comparative Example 2 is 72.3 µm. Comparing the aluminum electrolytic capacitor using the porous cellulose film obtained in Comparative Example 2 to the aluminum electrolytic capacitor using the porous cellulose film obtained in Working Example 7 having a thickness of 65.8 µm, the impedance deteriorated significantly in addition to decrease in the capacitance. It is considered that a thickness exceeding 70 µm and increase in anode-cathode distance between the anode aluminum foil and the cathode aluminum foil have significant effects. Since impedance characteristics of the aluminum electrolytic capacitor deteriorates easily when the thickness exceeds 70 µm, it is favorable to make the thickness of the porous cellulose film 70 µm or less.

As is evident from the embodiment and working examples described above, by making a porous cellulose film using an amine oxide cellulose solvent, a porous cellulose film not containing sulfate radicals that corrode the oxide film of the anode aluminum foil of the aluminum electrolytic capacitor can be obtained.

Moreover, by using TCF bleached or unbleached cellulose as the cellulose to be dissolved, a porous cellulose film having an extremely small chlorine content that corrodes the oxide film of the anode aluminum foil in a similar manner to the sulfate radicals can be obtained.

A porous cellulose film has hydrophilic properties and lipophilic properties as well as excellent electric insulation which is a characteristic of cellulose, and its thickness and density can be arbitrarily controlled. This allows provision of a separator having properties that are difficult to achieve with electrolytic paper, which is a mat of fibers. Use of the porous cellulose film of the present invention that does not contain matter that corrodes the oxide film of the anode aluminum foil allows provision of a separator for an aluminum electrolytic capacitor capable of down sizing and/or capacity enlargement and/or impedance reduction of an aluminum electrolytic capacitor that was impossible with electrolytic paper or a conventional porous cellulose film, and also provision of an aluminum electrolytic capacitor using said separator.

Since viscosity of the amine oxide cellulose solvent can be controlled by setting the cellulose soluble in the amine oxide to an arbitrary ratio, a porous cellulose film may be made using cellulose having a high degree of polymerization according to this embodiment. As a result, a highly strong porous cellulose film having excellent resistance against the electrolyte and a high degree of polymerization can be made.

In the paper making process, most of the strength of the paper in a wet state before drying is dependant on physical intertwining of fibers, thereby increasing the possibility of generation of breaks in the paper if number of overlapped fibers is reduced in order to make thin paper. Since the porous cellulose film is made by forming an amine oxide cellulose solvent in a film form and regenerating the cellulose in a coagulation bath, a thinner sheet can be made than by the paper making method.

Moreover, since the density of the porous cellulose film of this embodiment can be controlled at an arbitrary ratio by a method for making a film porous or through adjustment of conditions, a separator having a density of 0.25 g/cm³ or less, which is difficult to achieve with paper, can be obtained. While paper is a collective of pulp bonded by physical intertwining of individual pulp and hydrogen bonding at contact points, the porous cellulose film is a unified body of cellulose. Therefore, even in a low density region such as 0.10 to 0.25 g/cm³, sufficient strength such that the paper does not break during the process of constructing the capacitor element can be secured. A separator having high strength, low impedance, and excellent short-circuit resistance characteristics even in the density region of 0.25 to 1.00 g/cm³ of electrolytic paper that is generally used can be implemented.

Moreover, since the porous cellulose film of this embodiment is thinner than electrolytic paper, a less dense separator may be constructed. The porous cellulose film has excellent short-circuit resistance characteristics due to a microporous and dense configuration. Therefore, in the case of exchanging a separator of an aluminum electrolytic capacitor from the electrolytic paper to the porous cellulose film, a less dense or thinner separator may be used, and thus down sizing, capacity enlargement, impedance reduction, longer operating life, etc. of the aluminum electrolytic capacitor can be implemented. Note that the porous cellulose film may be used independently or it may be used in combination with another separator such as electrolytic paper.

The porous cellulose films of this embodiment and the working examples are available not only as a separator for aluminum electrolytic capacitors, but also as a separator for various storage devices such as a separator for conductive polymer aluminum electrolytic capacitors, a separator for electric double-layer capacitors, a separator for lithium-ion capacitors, a separator for lithium-ion batteries, a separator for alkaline-manganese batteries and the like, and are also available as various filters.

## Claims

1. A separator for an aluminum electrolytic capacitor constituted by a porous cellulose film made of dissolved and regenerated cellulose without forming a cellulose dielectric.

2. The separator for the aluminum electrolytic capacitor according to claim 1, wherein chlorine content of the porous cellulose film is 2 ppm or less.

3. The separator for the aluminum electrolytic capacitor according to claim 1 or claim 2, wherein hydrosulfate content of the porous cellulose film is 10 ppm or less.

4. The separator for the aluminum electrolytic capacitor according to any one of claim 1 to claim 3, wherein the porous cellulose film has a thickness of 5 to 70 µm, a density of 0.1 g/cm³ or greater, and an average pore size of 5 µm or less.

5. The separator for the aluminum electrolytic capacitor according to any one of claim 1 to claim 4, wherein the porous cellulose film is made of regenerated cellulose obtained by forming in a film form a cellulose solution made by dissolving cellulose in an amine oxide solvent, immersing the resulting cellulose solution in water or a poor solvent of the amine oxide solvent so as to coagulate and regenerate the cellulose, washing the regenerated cellulose with water to remove the amine oxide solvent, and drying the resulting cellulose.

6. The separator for the aluminum electrolytic capacitor according to any one of claim 1 to claim 5, wherein the main component of the amine oxide solvent is N-methylmorpholine N-oxide.

7. The separator for the aluminum electrolytic capacitor according to any one of claim 1 to claim 6, wherein the regenerated cellulose is washed with water to remove the amine oxide solvent.

8. An aluminum electrolytic capacitor using the separator for the aluminum electrolytic capacitor according to any one of claim 1 to claim 7.
